# EUROPEAN PATENT APPLICATION

(11) **EP 1 710 744 A1**
(43) Date of publication of application: **11.10.2006**
(21) Application number: 06111469.0
(22) Date of filing: 21.03.2006
(51) Int. Cl.: G06Q 30/00, G06Q 10/00

(54) **Association and visualization of schematized business networks**

(30) Priority: 31.03.2005 US 94988
(71) Applicant: Microsoft Corporation, Redmond WA 98052 (US)
(72) Inventor: Appel, David Benjamin, Redmond, WA 98052 (US); Merrifield Jr., Eric Sabbaton, Redmond, WA 98052 (US); Levy, Marc, Redmond, WA 98052 (US); Isaacs, Scott M., Redmond, WA 98052 (US); Homann, Ulrich, Redmond, WA 98052 (US); Judah, Norman B., Redmond, WA 98052 (US)
(74) Representative: Grünecker, Kinkeldey, Stockmair & Schwanhäusser Anwaltssozietät

(57) **Abstract**

The present invention extends to associating and visualizing schematized business networks. Users can visualize and navigate a business network without having got understand or create associations between structures of different business layers. Users can configure the level of detail by zooming in and zooming out of relevant portions of the business network such that the appropriate amount of detail for a given task is provided. Accordingly, users are provided business context for completing tasks more efficiently without being overwhelmed by unneeded business details and without lacking all the relevant business details.

## Description

### CROSS-REFERENCE TO RELATED APPLICATIONS

Not applicable.

### BACKGROUND OF THE INVENTION

**1. The Field of the Invention**

The present invention relates to business modeling and, more particularly, to associating and visualizing schematized business networks.

**2. The Relevant Technology**

Businesses have complex operations. An understanding of these operations is important to a business in order to, for example, prepare for change, account for costs, etc. Accordingly, various mechanisms have been developed to model and represent businesses. Some mechanisms include manual generation of diagrams that represent business processes that describe how work is done. For example, trained individuals can analyze all aspects of a business to identify business capabilities and interrelationships and interdependencies between the business processes. Based on the analysis, the trained individuals can generate the representative diagrams. However, accurate analysis of a business from a business process point-of-view can take an extended period of time. Further, once representative diagrams are generated such diagrams are not easily modified.

Unfortunately, since many business processes are dynamic (i.e., can change over time), a manually generated representation of business processes may be outdated before it is even completed. Further, even if a manually generated representation of business processes were accurate at the time it was completed, any change in business processes after the business representation is generated would cause the business representation to be incorrect. Thus, manually generated representations provide limited, if any, ability for a business to determine how simulated and/or hypothetical changes to various business capabilities would affect the business.

At least in part as a result of the deficiencies in manually generated business representations, some computerized mechanisms have been developed to generate business representations. These computerized mechanisms use various techniques to represent business and the required business functions mostly focused on modeling business processes and detailed procedures that support those processes. For example, some computerized mechanisms present a graphical view of business processes at a user-interface. To some limited extent, these graphical views can be altered to simulate the effect of different business capabilities on a business.

However, most of these computerized mechanisms focus on "how" the business is executed, conflating (or combining) various different layers (or types) of input data, such as, for example, organizational structures, procedures, process flows, and supporting technology. The stability of the input data (i.e., the half life of the information represented) potentially varies dramatically between the different input layers (or types), rendering the useful life time of a generated view only as valid as the least stable input. Conflating (or combining) interrelated, yet non-dependent, input data together can also result in obscured views of how a business functions and lead to unnecessary and costly improvement efforts of the modeled business, without the ability to determine the effect of changes in each individual layer.

Further, computerized mechanisms often include hard-coded data types and hard-coded representations for business modeling input data. These hard-coded data types and representations can be difficult to alter without access to source code. Thus, the flexibility and extensibility of modeling businesses and generating corresponding views is limited. For example, it may difficult to alter pre-defined data formats such that a business capability can be represented in a different way or such that a previously undefined business capability can be added.

All of the above for mentioned difficulties associated with modeling businesses limit the usefulness of visual presentations of such models. For example, most visual presentations of business models, such as, for example, business maps, center on data representations in the context of specific isolated tasks or activities. Visualizing and navigating to adjunct, potentially useful business data, organizations structure, partners, or relevant business process flows, is cumbersome and often impossible. For example, there is typically no mechanism to visually navigate from data in one business layer, such as, for example, a business process flow layer, to data in another business layer, such as, for example, a organizational structure layer indicating personnel that implement/manage a business process flow.

Additionally, there is typically no mechanism to visually navigate to from data in a business layer to data in other relevant non-business layers, such as, for example, a geographic layer. For example, there may be no way to navigate from a business flow map to a geographic map that indicates where the business process flow occurs.

Further, there is typically no mechanism to visually represent varied levels of detail of networked business elements. That is, typical business visualization techniques lack mechanisms to focus (or "zoom in") and abstract (or "zoom out") levels of detail as specified by a user. Thus, a user may be forced to use a business map having either to much or to little detail for a specific task. As a result, on one hand, a user may get bogged down in unnecessary details that make performing the task inefficient. On the other hand, a user may lack sufficient details for completing the task at all.

Accordingly, what would be advantageous are systems, methods, computer program products, and data structures for associating and visualizing schematized business networks.

### BRIEF SUMMARY OF THE INVENTION

The foregoing problems with the prior state of the art are overcome by the principles of the present invention, which are directed towards methods, systems, computer program products, and data structures for associating and visualizing schematized business networks. In some embodiments, a computer system generates a visual representation of a business architecture. The computer system accesses a structured business model of the business architecture. The structured business model includes business attributes and business attribute relationships that are formatted in accordance with data formats defined in a structured data model.

The computer system generates a renderable attribute object for each business attribute. The computer system generates a renderable relationship object for each business attribute relationship. The computer system visually renders the attribute objects and the graphical relationship objects as a navigable business architecture map that reflects the configuration of the business architecture.

In other embodiments, a computer system navigates a map of a business architecture. The computer system visually renders a portion of a navigable business architecture map. The portion of the navigable business architecture map includes visually rendered graphical attribute objects and visually rendered graphical relationship objects arranged to reflect the configuration of a corresponding portion of a business architecture. The computer system selects a first of the graphical objects as the point of focus within the portion of the navigable business architecture map. The remaining unselected graphical objects provide context to the functionality of a business attribute or a business attribute relationship represented by the selected graphical object.

The computer system navigates to a second graphical object within the navigable business architecture map. The computer system selects the second graphical object as the point of focus. The computer system visually renders second unselected graphical attribute objects and unselected graphical relationship objects around the selected second graphical object to provide context to the functionality of a second business attribute or a second business attribute relationship represented by the selected second graphical object. The visually rendered second unselected graphical attribute objects and visually rendered second unselected graphical relationship objects are arranged to reflect the configuration of a corresponding second portion of the business architecture.

In additional embodiments, a computer system alters the level of detail in a map of a business model. The computer system receives an indication that a business architecture map having an initial level of detail is to be rendered. The computer system visually renders graphical attribute objects and graphical attribute relationship objects as a navigable business architecture map having the initial level of detail. The navigable business architecture map reflects the configuration of corresponding business architecture at the initial level of detail. The graphical attribute objects and graphical relationship objects representing structured business attributes and structured business attribute relationships respectively of the business architecture.

The computer system receives an indication that the initial level of detail is to be changed to an updated level of detail. The computer system visually renders at least part of the graphical attribute objects and graphical attribute relationship objects as at least a portion of the navigable business architecture map having the updated level of detail. The portion of the navigable business architecture map reflects the configuration of a portion of the corresponding business architecture at the updated level of detail.

These and other features of the present invention will become more fully apparent from the following description and appended claims, or may be learned by the practice of the invention as set forth hereinafter.

### BRIEF DESCRIPTION OF THE DRAWINGS

To further clarify the above and other advantages and features of the present invention, a more particular description of the invention will be rendered by reference to specific embodiments thereof which are illustrated in the appended drawings. It is appreciated that these drawings depict only typical embodiments of the invention and are therefore not to be considered limiting of its scope. The invention will be described and explained with additional specificity and detail through the use of the accompanying drawings in which:

Figure 1 illustrates an example computer architecture that can be used to associate and visualize schematized business networks.

Figure 2 illustrates an example capability modeling schema that can be used for efficiently and flexibly business modeling based upon structured business capabilities.

Figure 3 illustrates an example flowchart of a method for associating and visualizing schematized business networks.

Figure 4 illustrates an example flowchart of a method for navigating a visual representation of a schematized business network.

Figure 5 illustrates an example flowchart of a method for altering the level of detail in a visual representation of a schematized business network.

Figures 6A and 6B illustrate a visual representation of a schematized business network at varied levels of detail

Figure 7 illustrates a visual representation of a model of a business process flow overlaid on top of a visual representation of a business capability network.

Figures 8A and 8B illustrate visual representations of a schematized business network where the focus of the visual representation is changed.

Figure 8C illustrates a visual representation of the schematized business network from Figures 8A and 8B overlaid on top of a visual representation of a model from a geographical business layer.

Figure 9 illustrates a suitable operating environment for the principles of the present invention.

Figure 10 illustrates a visual representation of the locations of a plurality of drivers relative to a customer.

### DETAILED DESCRIPTION OF THE PREFERRED EMBODIMENTS

The principles of the present invention provide for associating and visualizing schematized business networks. In some embodiments, a computer system generates a visual representation of a business architecture. The computer system accesses a structured business model of the business architecture. The structured business model includes business attributes and business attribute relationships that are formatted in accordance with data formats defined in a structured data model.

The computer system generates a renderable attribute object for each business attribute. The computer system generates a renderable relationship object for each business attribute relationship. The computer system visually renders the attribute objects and the graphical relationship objects as a navigable business architecture map that reflects the configuration of the business architecture.

In other embodiments, a computer system navigates a map of a business architecture. The computer system visually renders a portion of a navigable business architecture map. The portion of the navigable business architecture map includes visually rendered graphical attribute objects and visually rendered graphical relationship objects arranged to reflect the configuration of a corresponding portion of a business architecture. The computer system selects a first of the graphical objects as the point of focus within the portion of the navigable business architecture map. The remaining unselected graphical objects provide context to the functionality of a business attribute or a business attribute relationship represented by the selected graphical object.

The computer system navigates to a second graphical object within the navigable business architecture map. The computer system selects the second graphical object as the point of focus. The computer system visually renders second unselected graphical attribute objects and unselected graphical relationship objects around the selected second graphical object to provide context to the functionality of a second business attribute or a second business attribute relationship represented by the selected second graphical object. The visually rendered second unselected graphical attribute objects and visually rendered second unselected graphical relationship objects are arranged to reflect the configuration of a corresponding second portion of the business architecture.

In additional embodiments, a computer system alters the level of detail in a map of a business model. The computer system receives an indication that a business architecture map having an initial level of detail is to be rendered. The computer system visually renders graphical attribute objects and graphical attribute relationship objects as a navigable business architecture map having the initial level of detail. The navigable business architecture map reflects the configuration of corresponding business architecture at the initial level of detail. The graphical attribute objects and graphical relationship objects representing structured business attributes and structured business attribute relationships respectively of the business architecture.

Them computer system receives an indication that the initial level of detail is to be changed to an updated level of detail. The computer system visually renders at least part of the graphical attribute objects and graphical attribute relationship objects as at least a portion of the navigable business architecture map having the updated level of detail. The at least a portion of the navigable business architecture map reflects the configuration of a portion of the corresponding business architecture at the updated level of detail.

Embodiments within the scope of the present invention include computer-readable media for carrying or having computer-executable instructions or data structures stored thereon. Such computer-readable media may be any available media, which is accessible by a general-purpose or special-purpose computer system. By way of example, and not limitation, such computer-readable media can comprise physical storage media such as RAM, ROM, EPROM, CD-ROM or other optical disk storage, magnetic disk storage or other magnetic storage devices, or any other media which can be used to carry or store desired program code means in the form of computer-executable instructions, computer-readable instructions, or data structures and which may be accessed by a general-purpose or special-purpose computer system.

In this description and in the following claims, a "computer network" is defined as one or more data links that enable the transport of electronic data between computer systems and/or modules. When information is transferred or provided over a computer network or another communications connection (either hardwired, wireless, or a combination of hardwired or wireless) to a computer system, the connection is properly viewed as a computer-readable medium. Thus, any such connection is properly termed a computer-readable medium. Combinations of the above should also be included within the scope of computer-readable media. Computer-executable instructions comprise, for example, instructions and data which cause a general-purpose computer system or special-purpose computer system to perform a certain function or group of functions. The computer executable instructions may be, for example, binaries, intermediate format instructions such as assembly language, or even source code.

In this description and in the following claims, a "computer system" is defined as one or more software modules, one or more hardware modules, or combinations thereof, that work together to perform operations on electronic data. For example, the definition of computer system includes the hardware components of a personal computer, as well as software modules, such as the operating system of the personal computer. The physical layout of the modules is not important. A computer system may include one or more computers coupled via a computer network. Likewise, a computer system may include a single physical device (such as a mobile phone or Personal Digital Assistant "PDA") where internal modules (such as a memory and processor) work together to perform operations on electronic data.

In this description and the following claims, a "business layer" is defined as a view of specified characteristics of a business. For example, a business can be viewed based on its organizational structure, its business capabilities, it business processes, its service network, its geographic location, etc. Thus, a business can include a corresponding organizational layer, capability layer, process flow layer, service network layer, geographical layer, etc.

In this description and the following claims "business architecture" is defined as the overall design of at least a portion of a business. A business architecture for a company or one or more portions of a company can include one or more business layers that span various boundaries inside and/or outside of the company. For example, a company's business architecture can span externally physical boundaries (e.g., walls, buildings, etc.), internally physical boundaries (e.g., divisions, departments, etc.), and logical boundaries (e.g., a fiscal year end, a perceived service boundary, security etc.). Thus, an outsourced business capability can be viewed as part of the business architecture for a company even though the outsourced business capability is not performed by the company. Business architectures can be past, current (as-is), or future (to-be) architectures of an entire business or one or more portions of a business. A portion of a business can include e a specific sub-network or set of sub-networks of business capabilities.

Generally, the stability (or volatility) of different types of business models corresponding to different business layers can vary. That is, one type of business model can be more or less stable relative to other types of business models. For example, a business procedure model modeling business procedures may be more stable than a business organizational model modeling business organizational structure. On the other hand, business procedure modeling business procedures may be less stable than a business capability model modeling business capabilities.

In this description and in the following claims, a "business attribute" is defined as any attribute that can be used to model a business or part of a business. Different business modeling attributes can correspond to modeling different aspects (or different layers) of a business architecture. Thus, business modeling attributes can generally be divided into subsets of different types of business modeling attributes, such as, for example, business organizational attributes, business procedure attributes, business process flow attributes, business capability attributes, geographic attributes, etc. Accordingly, each different type of business attributes can be used to model business components of a corresponding business aspect (or business layer). For example, business organizational attributes can be used to model business organizational structures, business procedure attributes can be used to model business procedures, business process flow attributes can be used to model business process flows, business capability attributes can be used to model business capabilities, geographic attributes can be used to model geography, etc.

Thus, in this description and in the following claims, a "business component" is defined as a collective representation of the appropriate modeling result, such as, for example, business organizational structures, business procedures, business process flows, business capabilities, geography, etc., with respect to a particular business layer. Further, it would be apparent to one skilled in the art, after having reviewed this description, that other subsets of business modeling attributes, in additional to those expressly described, can be used to model other corresponding business aspects (or business layers).

In this description and in the following claims, a "business attribute relationship" is defined as an attribute that can be used to model a relationship between a first business attribute (of a first business component) and a second different business attribute (of a second business component). A relationship can be, for example, a dependency, a connection, or a boundary. A dependency can indicate what has to occur modeled business component to start, external events that that occur for a business component to stop, or other business components that depend on the business component. A connection indicates how one business component relates to other business components. A boundary indicates if influences on a business component are internal (e.g., people, process, technology inside a company) or external (e.g., regulations, customers, partners) to the business component. A business attribute relationship can be used to model a relationship between business components in the same business layer or between business components in different business layers.

In this description and in the following claims, a "schema" is defined as an expression of a shared vocabulary between a plurality of computer systems or modules that allows the plurality of computer systems or modules to process data according the expressed shared vocabulary. A schema can define and describe classes of data using constructs (e.g., name/value pairs) of a schema language. The schema constructs can be used to constrain and document the meaning, usage, and relationships of data types, elements and their content, attributes and their values, entities and their contents, and notations, as used in a specified application, such as, for example, a business capability model. Thus, any computer system or module that can access a schema can process data in accordance with the schema. Further, any computer system or module that can access a schema can compose or modify data for use by other computer systems and/or modules that can also access the schema.

A schema can be utilized to define virtually any data type including logical, binary, octal, decimal, hexadecimal, integer, floating-point, character, character string, user-defined data types, and combinations of these data types used to defined data structures. Some examples of user-defined data types are business capability properties, business capability inputs and outputs, business capability processes, business capability connections, and business capability service level expectations. A data type can also be defined to reference of link to other data types in a schema hierarchy.

An extensible Markup Language ("XML") schema is one example of a type of schema. An XML schema can define and describe a class of XML documents using schema constructs (e.g., name/value pairs) of an XML schema language. These schema constructs can be used to constrain and document the meaning, usage, and relationships of data types, elements and their content, attributes and their values, entities and their contents, and notations, as used in XML documents. Thus, schema is also defined to include Document Type Definitions ("DTD"), such as, for example, DTD files ending with a ".dtd" extension and World Wide Web Consortium ("W3C") XML Schemas, such as, for example, XML Schema files ending with a ".xsd" extension. However, the actually file extension for a particular DTD or XML schema is not important.

In this description and the following claims, a "business architecture" is defined as the overall design of at least a portion of a business. A business architecture for a company or one or more portions of a company can include business layers that span various boundaries inside and/or outside of the company. For example, a company's business architecture can span externally physical boundaries (e.g., walls, buildings, etc.), internally physical boundaries (e.g., divisions, departments, etc.), and logical boundaries (e.g., a fiscal year end, a perceived service boundary, security etc.). Thus, an outsourced business capability can be viewed as part of the business architecture for a company even though the outsourced business capability is not performed by the company. Business architectures can be past, current (as-is), or future (to-be) architectures of an entire business or one or more portions of a business. A portion of a business can be a specific sub-network or set of sub-networks of business capabilities.

Those skilled in the art will appreciate that the invention may be practiced in computer network environments with many types of computer system configurations, including, personal computers, laptop computers, hand-held devices, multi-processor systems, microprocessor-based or programmable consumer electronics, network PCs, minicomputers, mainframe computers, mobile telephones, PDAs, pagers, and the like. The invention may also be practiced in distributed system environments where local and remote computer systems, which are linked (either by hardwired data links, wireless data links, or by a combination of hardwired and wireless data links) through a computer network, both perform tasks. In a distributed system environment, program modules may be located in both local and remote memory storage devices.

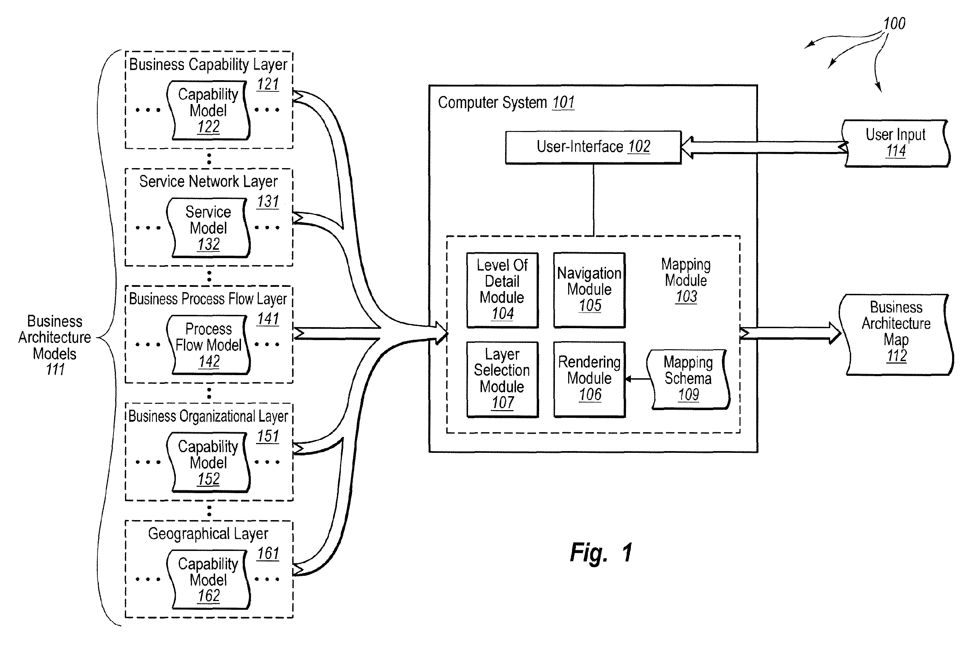

Figure 1 illustrates an example computer architecture 100 that can be used to associated and visualize schematized business networks. As depicted in computer architecture 100, computer system 101 includes user-interface 102 and mapping module 103. User-interface 102 is configured to interface between a computer system user and computer system 101. User-interface 102 can provide an interface for the computer system user to enter user-input 114 (e.g., selecting operations to business architecture maps) into mapping module 103 and to view output from mapping module 103.

Generally, mapping module 103 can include modules configured to rendering visual representations of business models. For example as depicted in computer architecture 100, mapping module 103 includes rendering module 108, mapping schema 109, level of detail module 104, navigation module 106, and layer selection module 107.

Rendering module 108 is configured to utilize mapping schema 109 to transform schematized business attributes and business attribute relationships into visually renderable (graphically) objects. Mapping schema 109 can provide a translation between schematized business attributes and business attribute relationships (of varies different business layers) and corresponding graphical objects. Rendering module 108 can render graphical objects for a plurality of different business layers within the same business map. Rendering module 108 can visually render maps of different business layers side-by-side or overlaid on top of one another.

Level of detail module 104 is configured to control levels of detail within a visual representation of a business model. For example, level of detail module 104 can hide or provide details with a visual representation in response to user-input. Thus, level of detail module 104 can cause less than all the data in business attribute and business attribute relationship graphical objects to be rendered.

Level of detail module 104 can also alter a level of detail such that a current level of detail is increased or decreased. For example, level of detail module 104 can focus (or "zoom-in") on levels of detail as requested by a user (e.g., to drill down on a specified part of a business map). On the other hand, level of detail module 104 can also abstract (or "zoom-out") levels of detail as requested by a user (e.g., to provide an overview of part of a business map). Level of detail module 104 can also display different portions of a business map with different levels of detail. Thus, a user can visual greater detail on specified portions of a business map and visual lesser detail on other portions of a business map. Using varied levels of detail can facilitate drilling down into a specified portion of a business map in increased detail and yet still providing context (i.e., reduced detail surrounding components) for the increased detail portions.

Navigation module 106 is configured to facilitate navigation from a first business component to a second business component via a relationship between the first and second business components. Navigation module 106 can facilitate navigation between business components in the same or in different business layers.

Layer selection module 107 is configured to determine what business layers are to be visually rendered. Layer selection module 107 can filter business attributes and business attribute relationships for layers that are not to be rendered such that rendering module 108 does not receive business attributes and business attribute relationships for filtered layers. In response to user-input, filtered and non-filtered layers can be changed. Thus, additional business layers can be overlaid or placed side-by-side to rendered layers after the rendered layers are rendered.

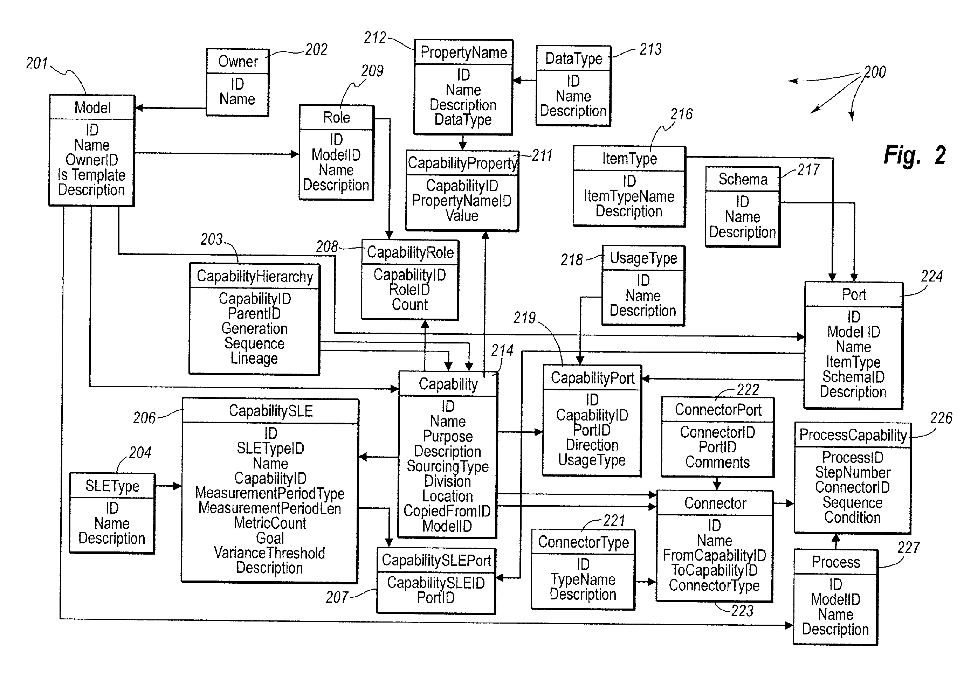

Generally, computer system 101 is configured to receive business models generated in accordance with appropriate data models, unstructured business models, and/or unstructured business data. In response to receiving unstructured business models and/or unstructured business data, computer system 101 can refer to the appropriate data models to generate business models in accordance with the data models. Figure 2 depicts one example of a business capability modeling schema 200 that will be described in further detail below.

A business layer within a business architecture can be modeled using a single data model. For example, it may be that a single business capability data model is used to model a business capability layer of a business architecture. However, a business layer can also be modeled using any of a plurality different data models. For example, it may be that any of a plurality of different business capability data models is used to model a business capability layer of a business architecture.

Further, the same business layer within different business architectures can be modeled using the same data model or similar data models. For example, it may be that the same data model is used to model a business capability layer of a first business architecture is also used to model a corresponding business capability layer of a second business architecture. In this description and in the following claims, a "similarly typed business models" are defined as models based on the same data model or similar data model.

However, different data models can be used to model the same business layer within different business architectures. For example, it may be that a first business capability data model is used to a model a business capability layer of a first business architecture and a second business capability data model is used to model a business capability layer of a second business architecture. Additionally, different data models can be used to model different business layers of the same business architecture. For example, it may be that a business capability data model is used to model a business capability layer of a business architecture and a service network data model is used to model a service network layer of the business architecture.

Thus, computer system 101 can access business models corresponding to different business layers (e.g., business capability layer 121, service network layer 131, business process flow layer 141, business organizational layer 151, geographic layer 161, etc.). For example, computer system 101 can access one or more of capability model 122, service model 132, process flow model 142, and organizational model 152, and geographic model 162. A vertical series of two consecutive periods (a vertical ellipsis) before, between, and after the expressly depicted layers represents that computer architecture 100 can include other additional layers. A horizontal series of two consecutive periods (an ellipsis) before, between, and after the expressly depicted models in each layer represents that each layer can include other additional models. Collectively, the models 122, 132, 142, 152, and 162 represent business architecture 111.

Mapping module 103 can perform one or more mapping operations (e.g. transforming and rendering business attributes and business attribute relationships) on accessed models (potentially in response to user entered commands) and can generate corresponding business architecture maps. Generated maps can be output at user-interface 102, sent to other processing modules for further processing, and/or can be sent via electronic messages to other computer systems.

As previously described, various different data models can be used to model different business layers. Thus in some embodiments, data models can include at least one business capability modeling schema for modeling a business capability layer, at least one business organizational schema for modeling a business organizational layer, at least one business process flow modeling schema for modeling a business process flow layer, at least one service network layer business modeling schema for modeling a service network layer, etc.

In some embodiments, business models and data format definitions can be generally described as indicated in Table 1.

**Table 1**

| | |
|---|---|
| Models | Models serve to group capabilities into distinct groups that describe a single business. Models can contain all the capabilities defined for the business as well as how any defined capabilities relate to each other in terms of hierarchical decomposition and process flow relationships. Models facilitate the segmentation of data in a repository into distinct business models which can be compared with one another but are separate from each other. Further, while capability data is defined within a model, other data elements of the data model are outside of the model and facilitate the comparison of different models with one another. |
| Capabilities | Capabilities are individual business functional areas that are modeled in at least three different ways in the model. Capabilities can be modeled as individual things with their own set of properties; as a decomposition hierarchy of functional areas; and as connected in simple business process flows. Coarser (or higher level) capabilities can include a set of more granular (or lower level) capabilities, such as , for example, when a higher level capability is decomposed into its constituent parts. The assignment of properties to capabilities may occur at multiple levels in a hierarchy, which can be used to control later data transformations. For example, when a higher level capability is manipulated through a transformation, corresponding lower level capabilities' properties can be |
| | considered in the transformation |
| Capability Inputs and Outputs | Capability Inputs and Outputs are the artifacts and events that are consumed and/or produced by business capabilities. They represent what is outward and visible about the behavior of the capabilities. Inputs can be consumed and outputs can be produced independently of other inputs and outputs. For example, there is no requirement that all the inputs for a capability be consumed before the capability starts. Likewise, there is no requirement that all the processing of a capability be completed before an output can be produced. |
| Processes | Processes are networks of business capabilities that are connected in a flow to illustrate and end-to-end view of a business process. Processes defme the connections between capabilities that enable larger business functions. Processes modeled in the data model can refer to cross-capability processes that represent traversal of boundaries between capabilities. |
| Connections | Connections are used to represent relationships between business capabilities. Connections can be data connections over which data, such as, for example, a business document, can flow between those capabilities. However, other types of connections are also possible. Connections may also refer to oversight or management of a business function, as frequently occurs in regulated areas of business activity. Connections can be typed such that connection types are the same across all models. Typed connections can be used to facilitate model comparisons. |
| Service Levels | Service levels refer to the general expectation of the performance of a capability. Service levels attach performance and accountability attributes to a capability in varying degrees of formality (e.g., contractual) and time (e.g., historical, current, target, and maximum). In some embodiments, a capability includes a verb and noun phrase (or such a verb-noun phrase can be construed from the capability description). Service level descriptive data associated with the capability indicates how well the capability performs the action implied by the phrase. For example, Approve Loan Application might have a service level expectation of 2 days. |

Figure 2 illustrates an example business capability modeling schema 200 that can be used for efficiently and flexibly business modeling based upon structured business capabilities. Business capability modeling schema 200 can include data formats for modeling business capability properties, business capability inputs and outputs, business capability processes, business capability connections, and business capability service level expectations. It should be understood that business capability modeling schema 200 can be one of a plurality of schemas that includes data definitions for modeling a corresponding plurality of different business modeling attributes.

Depicted in Figure 2, schema 200 includes model data format 201. Generally, model data format 201 can be described as indicated in Table 2.

**Table 2**

| Name | Data Type | Description |
|---|---|---|
| ID | int | Key to the model and is used to relate other data entities to this model. |
| Name | varchar(150) | A unique name that identifies the model. |
| OwnerID | int | Points to the owner of the model. An owner can own many models. |
| IsTemplate | bit | Controls the ability of a modeler to modify this model. If this field is true, it means that this model is to be used as a template for other models and can thus be used to compare the derived models, even after properties are changed by modelers in the derived models. Therefore, this model cannot be changed by normal editors of models. Defaults to false |
| Description | varchar(2000) | Textual description of the model. |

Depicted in Figure 2, schema 200 includes owner data format 202. Generally, owner data format 202 can be described as indicated in Table 3.

**Table 3**

| Name | Data Type | Description |
|---|---|---|
| ID | int | Key to the owner and is used to relate other data entities to this owner. |
| Name | varchar(50) | Unique name of the owner. |

Depicted in Figure 2, schema 200 includes capability data format 214. Generally, capability data format 214 can be described as indicated in Table 4.

**Table 4**

| Name | Data Type | Description |
|---|---|---|
| ID | int | Key to the capability and is used to relate other data entities to this capability. |
| Name | varchar(256) | Name that is unique within a particular model. |
| Purpose | varchar(1000) | Short description of the capability. |
| Description | varchar(8000) | A more detailed description of the capability and may explain relationships and properties of this capability as well as the capability itself. |
| SourcingType | int | This field can have three values: Internal, Outsourced, or Both. It indicates whether or not the capability is performed by an organization that is internal (part of) the organization that "owns" the model; or an organization that is a supplier of the capability to the "owner" of the model; or it is performed by both internal and external suppliers. |
| Division | varchar(100) | Identifies the business organizational area where a capability is performed. |
| Location | varchar(100) | Geographical location where the capability is performed. |
| CopiedFromID | int | Indicates the specific capability (and hence template model) from which this capability was copied. Can be a system-set value. |
| ModelID | int | Indicates the model to which this capability belongs. |

Depicted in Figure 2, schema 200 includes capability hierarchy data format 203. Generally, capability hierarchy data format 203 can be described as indicated in Table 5.

**Table 5**

| Name | Data Type | Description |
|---|---|---|
| CapabilityID | int | Links to a capability. |
| ParentID | int | Links to a capability in the same model and indicates the parent of this capability in a hierarchical view of the model's capabilities. |
| Generation | int | Part of the lineage key which is used in |
| | | certain queries. |
| Sequence | int | Part of the lineage key which is used in certain queries. |
| Lineage | varchar(20) | Indicates the entire ancestral lineage of a capability and used to perform hierarchical sorts. |

Depicted in Figure 2, schema 200 includes capability property data format 211. Generally, capability property data format 211 can be described as indicated in Table 6.

**Table 6**

| Name | Data Type | Description |
|---|---|---|
| CapabilityID | int | Links to a capability. |
| PropertyNameID | int | Links to a user-defined property. |
| Value | varchar(250) | Yalue of the property for this capability. |

Depicted in Figure 2, schema 200 includes property name data format 212. Generally, property name data format 212 can be described as indicated in Table 7.

**Table 7**

| Name | Data Type | Description |
|---|---|---|
| ID | int | Key to the property and is used to relate this property to capabilities. |
| Name | varchar(250) | Name of the property and is user defmed. |
| Description | varchar(4000) | Description of what the property is and how it is to be used to describe capabilities. |
| DataType | int | Links to the DataType entity and indicates the type of data that is expected when a modeler sets a value for this property for a capability. If, for example, the modeler defines a property named "Fixed Cost Allocation", it is likely that the data type for this property would be "Currency". |

Depicted in Figure 2, schema 200 includes data type data format 213. Generally, data type data format 213 can be described as indicated in Table 8.

**Table 8**

| Name | Data Type | Description |
|---|---|---|
| ID | int | Key to the data type and is used to indicate the data type of a user defined property. This is one of a few tables that we assume are not modified by modelers as the modeling tools rely on the values being "known" in order to perform validations of property values correctly. |
| Name | varchar(20) | A friendly name of the data type. Examples are "Integer", "String", "Currency", etc. |
| Description | varchar(4000) | Any additional information about the data type that would be useful especially in guiding user selection of data types for the properties that they define. |

Depicted in Figure 2, schema 200 includes port data format 224. Ports corresponding to a business capability can be used to transfer input into and output out of the corresponding business capability. Generally, port data format 224 can be described as indicated in Table 9.

**Table 9**

| Name | Data Type | Description |
|---|---|---|
| ID | int | Key to the port and is used to relate this port to other entities. |
| ModelID | int | Indicates that this port belongs to the related model. When dealing with a particular model, only the ports associated with the model are available to the modeler. A port is something that is input to - consumed by - a capability or output from - produced by - a capability. |
| Name | varchar(256) | A unique name within the specific model. |
| ItemType | int | Links to the ItemType entity which indicates the type of input or output, which could be electronic data, a physical item, a fax, an event, etc. |
| SchemaID | int | If the itemtype indicates that this is an electronic data record of some kind, this field links to the schema that describes the content of the data record. |
| Description | varchar(4000) | A detailed description of the input/output item. |

Depicted in Figure 2, schema 200 includes capability port data format 219. Generally, capability port data format 219 can be described as indicated in Table 10.

**Table 10**

| Name | Data Type | Description |
|---|---|---|
| ID | int | Key to the capability port and is used to relate this port to other entities. |
| CapabilityID | int | Links to the capability that is referenced by this relationship. |
| PortID | int | Links to the port that is referenced by this relationship. |
| Direction | int | Has three values and indicates whether or not the item is input into the referenced capability, output from the referenced capability, or it flows both directions. |
| UsageType | int | Links to the UsageType entity and indicates how the capability uses this item. Examples are "Read only", "Read and update", "Create", etc. |

Depicted in Figure 2, schema 200 includes usage type data format 218. Generally, usage type data format 218 can be described as indicated in Table 11.

**Table 11**

| Name | Data Type | Description |
|---|---|---|
| ID | int | Key to the UsageType and is used to relate this usage type to the input/output items (port entity). This table is assumed to be non-modifiable by modelers as the tools rely on its specific values to process models. |
| Name | varchar(150) | A unique name that identifies the usage type. Examples include "Read only", "Read and update", "Create", etc. |
| Description | varchar(4000) | A more detailed description of the usage type and how the modeling tools may behave when dealing with a specific usage type. |

Depicted in Figure 2, schema 200 includes item type data format 216. Generally, item type data format 216 can be described as indicated in Table 12.

**Table 12**

| Name | Data Type | Description |
|---|---|---|
| ID | int | Key to the ItemType and is used to relate this item type to the input/output items (port entity). This table is assumed to be non-modifiable by modelers as the tools rely on its specific values to process models. |
| ItemTypeName | varchar(150) | A unique name that identifies the usage type. Examples include "Electronic data", "Physical item", "Fax", etc. |
| Description | varchar(4000) | A more detailed description of the item type and how the modeling tools may behave when dealing with a specific item type. |

Depicted in Figure 2, schema 200 includes schema data format 217. Generally, schema data format 217 can be described as indicated in Table 13.

**Table 13**

| Name | Data Type | Description |
|---|---|---|
| ID | int | This is the key to the Schema entity and is used to relate this item type to the input/output items (port entity). |
| Name | varchar(250) | This is a unique name for a schema. |
| Description | varchar(4000) | This may be a detailed description of the data content for a data record in the form of an XML schema (or some simplification thereof). |

Depicted in Figure 2, schema 200 includes process data format 227. Generally, process data format 227 can be described as indicated in Table 14.

**Table 14**

| Name | Data Type | Description |
|---|---|---|
| ID | int | Key to the Process entity and is used to relate this item type to connector entities, and through them to the related capabilities in the ProcessCapability entity. |
| ModelID | int | Indicates the model that these processes belong to. |
| Name | varchar(256) | A unique name for a process within this |
| | | model. |
| Description | varchar(4000) | Describes the process that is modeled by this entity and the ProcessCapability entities. |

Depicted in Figure 2, schema 200 includes process capability data format 227. Generally, process capability data format 227 can be described as indicated in Table 15.

**Table 15**

| Name | Data Type | Description |
|---|---|---|
| ProcessID | int | Indicates the process that this capabilities and connections belong to. |
| StepNumber | int | Indicates the sequence of this connection in the process and is used to sort the process steps for rendering in a visual model. |
| ConnectorID | int | Links to the Connector entity and through it to the source and target capabilities of a process flow from a source capability to a destination capability. |
| Sequence | int | Indicates the sequence of a connection within a step, thereby supporting process flows that have multiple paths through it. To define a path where one leg has more steps (or flows through more capabilities) than another leg, the shorter leg is represented by entries in this table that reference the same connector but different StepNumbers. |
| Condition | varchar(4000) | Stores comments on what the conditions are that drive the process. |

Depicted in Figure 2, schema 200 includes connector data format 223. Generally, connecter data format 223 can be described as indicated in Table 16.

**Table 16**

| Name | Data Type | Description |
|---|---|---|
| ID | int | Key to the Connector entity and indicates the connection between two capabilities. This |

| | | key is used to link this connection to other entities. |
|---|---|---|
| Name | varchar(256) | A comment that is associated with this connection between two capabilities. |
| FromCapabilityID | int | References the capability that is the source capability. Depending on the ConnectorType, the meaning of being the source capability may differ slightly. |
| ToCapabilityID | int | References the capability that is the target capability. Depending on the ConnectorType, the meaning of being the target capability may differ slightly. |
| ConnectorType | int | Link to the ConnectorType entity and indicates what the relationship between the two referenced capabilities really means. Examples are "Collaborative", "Controlling", "Dependent", etc. |

Depicted in Figure 2, schema 200 includes connector type data format 221. Generally, connecter type data format 221 can be described as indicated in Table 17.

**Table 17**

| Name | Data Type | Description |
|---|---|---|
| ID | int | Key to the ConnectorType entity and is used to describe the connection type in the Connector entity. |
| TypeName | varchar(50) | A unique name that describes the type of connection. Examples are "Collaborative", "Controlling", "Dependent", etc. |
| Description | varchar(4000) | A detailed description of the connection type and helps modelers understand what connections mean in their models. |

Depicted in Figure 2, schema 200 includes connector port data format 222. Generally, connecter port data format 222 can be described as indicated in Table 18.

**Table 18**

| Name | Data Type | Description |
|---|---|---|
| ConnectorID | int | A reference to the Connector entity and serves to link a specific connection between two capabilities with a specific input/output item. |
| PortID | int | A reference to the Port entity (input/output |
| | | item) and serves to identify the input/output item that flows along a specific connection. |
| Comments | varchar(4000) | More detailed commentary about this flow of an item along this connection. |

Depicted in Figure 2, schema 200 includes role data format 209. Generally, role data format 209 can be described as indicated in Table 19.

**Table 19**

| Name | Data Type | Description |
|---|---|---|
| ID | int | Key to the Role entity and is used to relate this role to Capability entities. |
| ModelID | int | Indicates what model this role entity belongs to. |
| Name | varchar(100) | A unique name for the role within this model. A role describes a type of person or user involved in performing capabilities. |
| Description | varchar(2000) | Provides a description of the role and may provide guidance to modelers in their choice of roles to associate with capabilities. |

Depicted in Figure 2, schema 200 includes capability role data format 208. Generally, capability role data format 208 can be described as indicated in Table 20.

**Table 20**

| Name | Data Type | Description |
|---|---|---|
| CapabilityID | int | References a specific capability and serves to link that capability with a specific role. |
| RoleID | int | References a specific role and links it to the referenced capability. |
| Count | int | Indicates the number of people in this role that are required to perform this capability. A value of '0' indicates that the role participation has not been quantified. |

Depicted in Figure 2, schema 200 includes SLE type data format 204. Generally, SLE type data format 204 can be described as indicated in Table 21.

**Table 21**

| Name | Data Type | Description |
|---|---|---|
| ID | int | Key to the SLEType entity and is used to relate this role to CapabilitySLE entities. |
| Name | varchar(100) | Uniquely names the type of service level that is described in this entity. This entity is assumed to be read-only by modelers because the modeling tools rely on the value of these entries to visualize service levels. Some values for service level types include "Duration", "Throughput", "Monetary Cost", "Time Cost" and "Concurrency". |
| Description | varchar(4000) | A detailed description of the service level type and how to describe specific service levels related to capabilities. |

Depicted in Figure 2, schema 200 includes Capability SLE data format 206. Generally, Capability SLE data format 206 can be described as indicated in Table 22.

**Table 22**

| Name | Data Type | Description |
|---|---|---|
| ID | int | Key to the Role entity and is used to relate this role to Capability entities. |
| SLETypeID | int | References the SLEType entity and identifies a specific way to measure a service level. |
| Name | varchar(50) | A unique name for the service level definition. |
| CapabilityID | int | References the capability to which this service level applies. |
| MeasurementPeriodType | varchar(50) | Names the unit of measure for the service level. For "Duration" type service levels, this should be a time period. For a "Monetary Cost" SLE type, "Dollars" or "Thousands of dollars" would be appropriate. |
| MeasurementPeriodLen | int | If the SLE type references a "Throughput" type of SLE, this field indicates the length of the measurement period for throughput. |
| MetricCount | int | An actual (current status/performance or historical performance) measurement of the SLE, such as the number of days of duration, the number of items completed for throughput, the amount of dollars for monetary cost, etc. |
| Goal | int | A target for future performance such as |
| | | the number of days of duration, the number of items completed for throughput, the amount of dollars for monetary cost, etc. |
| VarianceThreshold | int | How much variation in performance (e.g., from a goal) is tolerated before a variation is noted or notification is sent. For example, when a variance threshold is exceeded an electronic mail message can be sent to appropriate management personnel |
| Description | varchar(2000) | A detailed description of the SLE for this capability. |

Depicted in Figure 2, schema 200 includes Capability SLE Port data format 207. Generally, Capability SLE port data format 207 can be described as indicated in Table 23.

**Table 23**

| | | |
|---|---|---|
| CapabilitySLEID | int | References a particular service level for a specific capability as described in a CapabilitySLE entity. It serves to link a particular service level to a particular input or output item. |
| PortID | int | References a particular input or output item of a capability and links a service level to the specific item that is being measured. For example, this might reference mortgage approvals for a duration service level for a mortgage processing capability and the entire service level definition might thereby describe that 100 mortgage approvals are completed every day for the mortgage processing capability. |

It should be understood that schema 100 is merely one example of a business capability modeling schema. Further, modeling business capabilities does not require that capability attributes for all the data formats in schema 200 be accessible. For example, a capability and connecter can be used to model a business capability based on capability data format 214 and connector data format 223, without accessing capability attributes correspond to other data formats. Thus, schema 200 defines data formats for business capability attributes that are accessed, but does not require that all data formats be populated to generate a business capability model.

It would be apparent to one skilled in the art, after having reviewed this description, that embodiments of the present invention can be used with a wide variety of other business capability modeling schemas, in addition to schema 200. It would also be apparent to one skilled in the art, after having reviewed this description, that embodiments of the present invention can be used with a wide variety of other schemas that facilitate modeling other business layers.

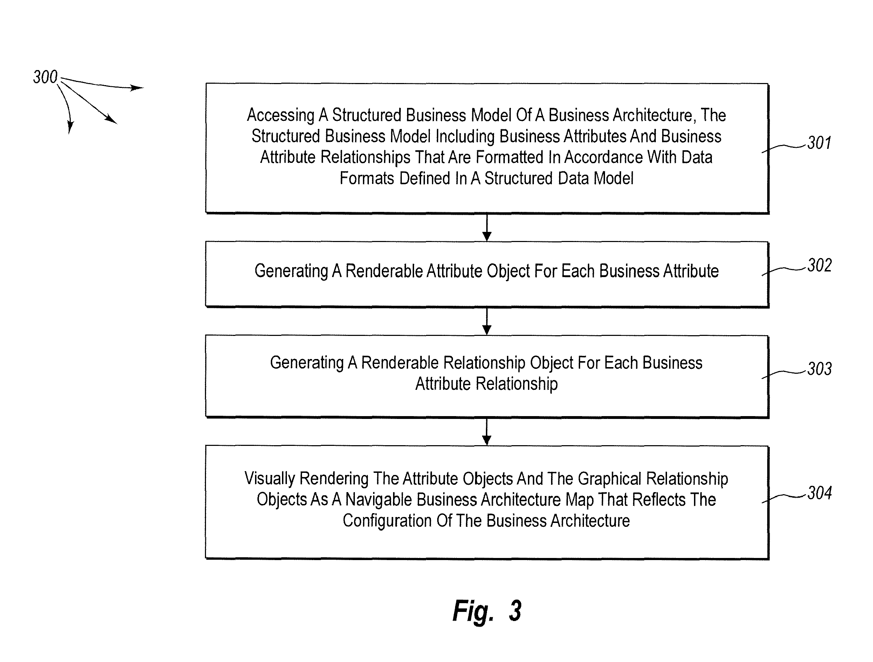

Figure 3 illustrates an example flowchart of a method 300 for associating and visualizing schematized business networks. The method 400 will be described with respect to the components and data in architectures 100 and to various visually rendered business model maps in other Figures.

Method 300 includes an act of accessing a structured business model of a business architecture (act 301). The structured business model including business attributes and business attribute relationships that are formatted in accordance with data formats defined in a structured data model. For example, mapping module 103 can access capability model 122. Capability model 122 can include business attributes and business attribute relationships formatted in accordance with the data formats of schema 300.

Method 300 includes an act of generating a renderable attribute object for each business attribute (act 302). For example, rendering module 108 can utilize mapping schema 109 to transform structured business attributes contained in capability model 122 into corresponding visually renderable graphical attribute relationship objects.

Method 300 includes an act of generating a renderable relationship object for each business attribute relationship (act 303). For example, rendering module 108 can utilize mapping schema 109 to transform structured business attribute relationships contained in capability model 122 into corresponding visually renderable graphical objects.

Method 300 includes an act of visually rendering the attribute objects and the graphical relationship objects as a navigable business architecture map that reflects the configuration of the business architecture (act 304). For example, rendering model 108 can visually render graphical attribute objects and the graphical relationship objects as business architecture map 112. Business architecture map 112 can reflect the configuration of the business architecture modeled in capability model 122.

Business architecture map 112 includes selectable components that allow a user to navigate between the components. For example, a use can selected a graphical retionship object to navigate between related graphical attribute objects. Alternately, a user can select (e.g., with a mouse or through keyboard input) a graphical attribute object or a graphical relationship object to cause focus to shift to the selected graphical attribute object or a graphical relationship. Thus, a use can navigate to virtually any graphical attribute object or a graphical relationship object simply by selecting the object.

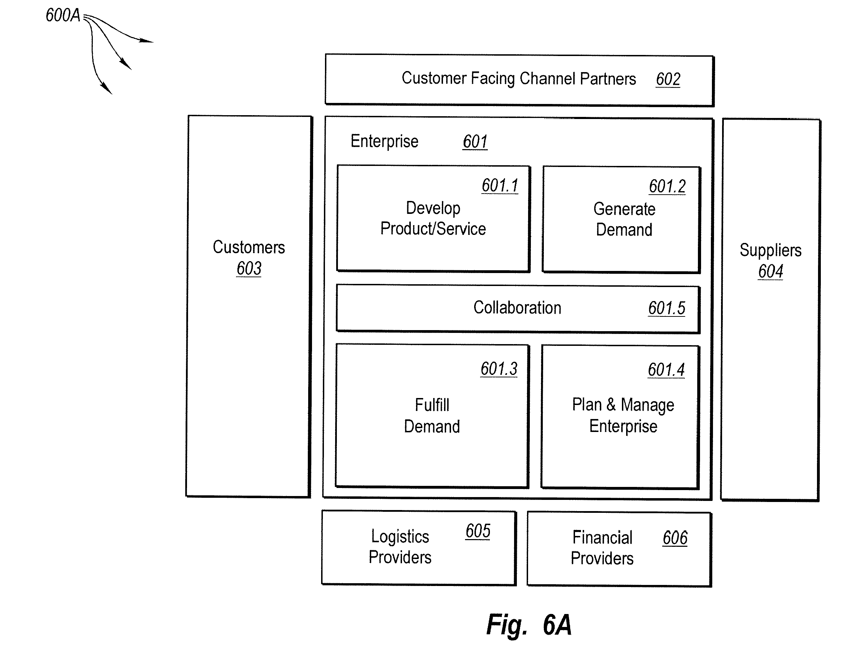

Figure 6A depicts an example visual representation 600A (e.g., a map) of various business capabilities. The visual rendered business capabilities in visual representation 600A are rendered with varied levels of detail. For example, customer facing channel partners 602, customers 603, suppliers 604, logistic providers 605, and financial providers 606 are rendered with less detail. On the other hand, enterprise 601 is rendered with more detail. That is, various capabilities included within enterprise 601 are also expressly rendered. For example, develop product /service 601.1, generate demand 601.2, fulfill demand 601.3, plan and manage enterprise 601.4, and collaboration 601.5 are expressly rendered within enterprise 601. Accordingly, a user is provided more a detailed view of enterprise 601 along with some context for other capabilities in visual representation 600A.

Visual representation 600A can be presented through user-interface 102 to a user of computer system 101. The user can navigate to an object in visual representation 600A by selecting the object from within user-interface 102. For example, a user can navigate to fulfill demand 601.3 by selecting fulfill demand 601.3 with a mouse. Input indicating object selection can be received at navigation module 104. Navigation model 104 can interoperation with rendering module 108 to visually represent that an object has been selected.

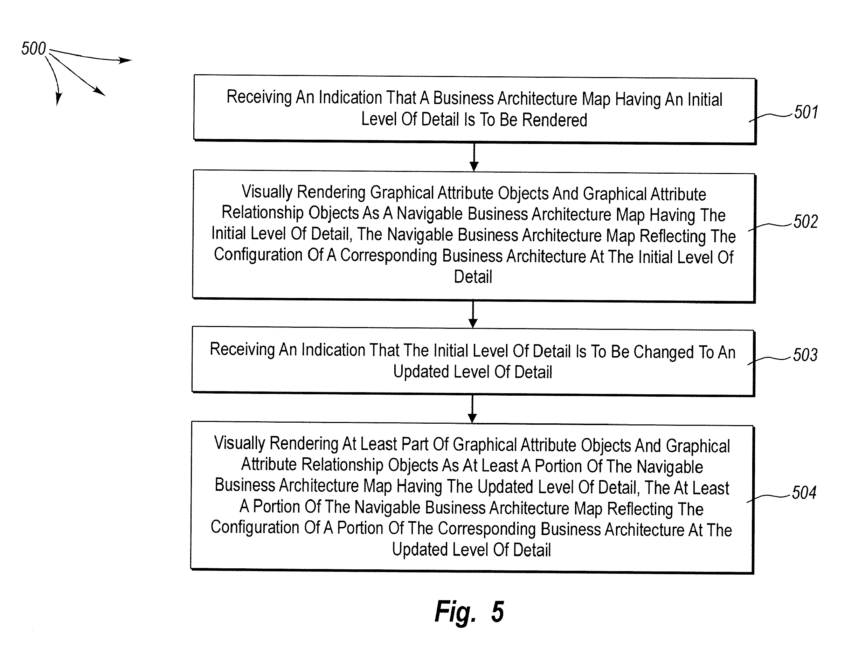

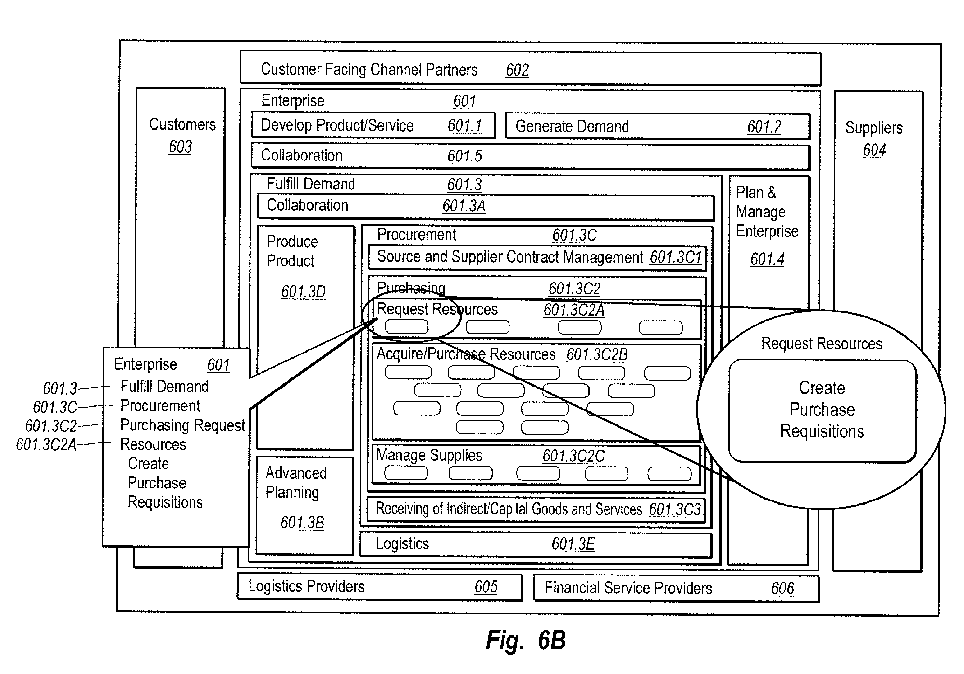

Figure 5 illustrates an example flowchart of a method 500 for altering the level of detail in a visual representation of a schematized business network. Method 500 will be described with respect to the components in computer architecture 100 with further respect to visual representation 600A and visual representation 600B of Figure 6B.

Method 500 includes an act of receiving an indication that a business architecture map having an initial level of detail is to be rendered (act 501). For example, user-interface 102 can receive user-input 114 indicating an initial level of detail for business architecture map 112. User-interface 102 can transfer user-input 114 to level of detail module 104. An initial level of detail can indicate that all objects are to be rendered at the same level of detail. However, the initial level of detail is configurable across different objects such that the initial level of detail differs for different graphical objects. Thus, an initial level of detail can indicate that different objects are to be rendered at different levels of detail.

Method 500 includes an act of visually rendering graphical attribute objects and graphical attribute relationship objects as a navigable business architecture map having the initial level of detail (act 502). The navigable business architecture map reflects the configuration of a corresponding business architecture at the initial level of detail. The graphical attribute objects and graphical relationship objects represent structured business attributes and structured business attribute relationships respectively of the business architecture. For example, mapping module 103 can render visual representation 600A. Visual representation 600A can reflect the configuration of a portion of the business architecture corresponding to architecture models 111. Visual representation 600A can be a visual rendering of graphical attribute objects and graphical attribute relationship objects that represent corresponding structured business attributes and structured business attribute relationships from business architecture 111.

When a business model, such as, for example, capability model 122, is received, the business model may include structured attributes and structured attribute relationships that model business components at a number of different levels of detail. Based on the initial level of detail, level of detail module 104 can select appropriate structured attributes and structured attribute relationship that are to be mapped. Level of detail module 104 can interoperate with rending module 108 to facilitate the appropriate level of detail for each object in a rendered map, such as, for example, in visual representation 600A. Mapping module 103 can retain structured attributes and structured attribute relationships corresponding to increased levels of detail, even when objects in a map are rendered with reduced levels of detail.

For example, the business model corresponding to visual representation 600A may include structured attributes and structured attribute relationships corresponding to a plurality of different levels of detail (e.g., six different levels of detail). Level of detail module 104 and rendering module 108 can interoperate to render visual representation 600A with an indicated initial level of detail. Thus, visual representation 600A can be rendered partially at a most reduced level of detail (e.g., level 1) and partially at an incrementally increased level of detail (e.g., level 2). That is, within visual representation 600A, customer facing channel partners 602, customers 603, suppliers 604, logistic providers 605, and financial providers 606 are rendered with less detail (no internal components expressly rendered) and enterprise 601 is rendered with increased detail (some internal components expressly rendered). Accordingly, mapping module 103 can retain structured attributes and structured attribute relationships for abstracted (or not expressly rendered) portions of the corresponding business model. For example, mapping module 103 can retain structured attributes and structured attribute relationships for levels 3 - 6 (and potentially for non-rendered portions of level 2) of enterprise 601.

As previously described an "initial level of detail" can indicate that different objects are to be rendered with different levels of detail. For example, visual representation 600A is rendered with an initial level of detail even though some objects are rendered with increased detail and some objects are rendered reduced detail.

Method 500 includes an act of receiving an indication that the initial level of detail is to be changed to an updated level of detail (act 503). For example, user-interface 102 can receive user-input indicating that level of detail for business architecture map 112 is to be changed. User-interface 102 can transfer user-input 114 to mapping module 103. Changing a level of detail can include increasing and/or decreasing the level of detail of all, some, or one of the graphical objects in a business architecture map. For example, a second level of detail can indicate that fulfill demand 601.3 is to be rendered with increased detail.

Method 500 includes an act visually rendering at least part of graphical attribute objects and graphical attribute relationship objects as at least a portion of the navigable business architecture map having the updated level of detail (act 504). The at least a portion of the navigable business architecture map reflects the configuration of a portion of the corresponding business architecture at the updated level of detail. For example, mapping module 103 can render visual representation 600B.

As depicted in visual representation 600B the detail of fulfill demand 601.3 is increased by a number of levels of detail. Based on the updated level of detail, level of detail module 104 and rendering module 108 can interoperate to identify structured business attributes and structured business attribute relationships that at to be rendered. This interoperation can potentially include accessing previously received and maintained structured business attributes and structured business attribute relationships corresponding to the increased levels of detail.

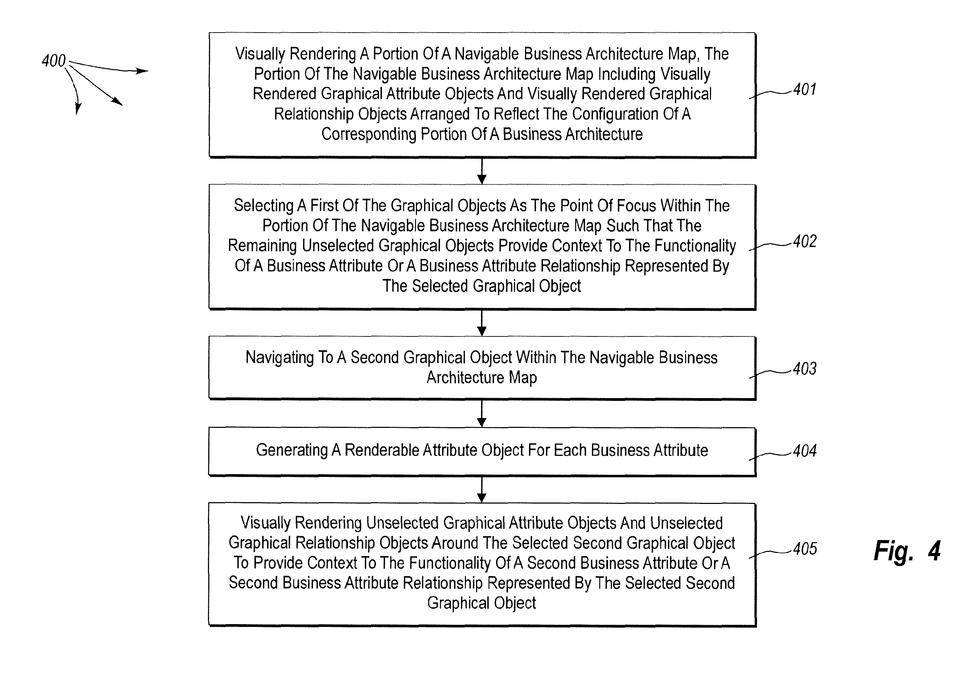

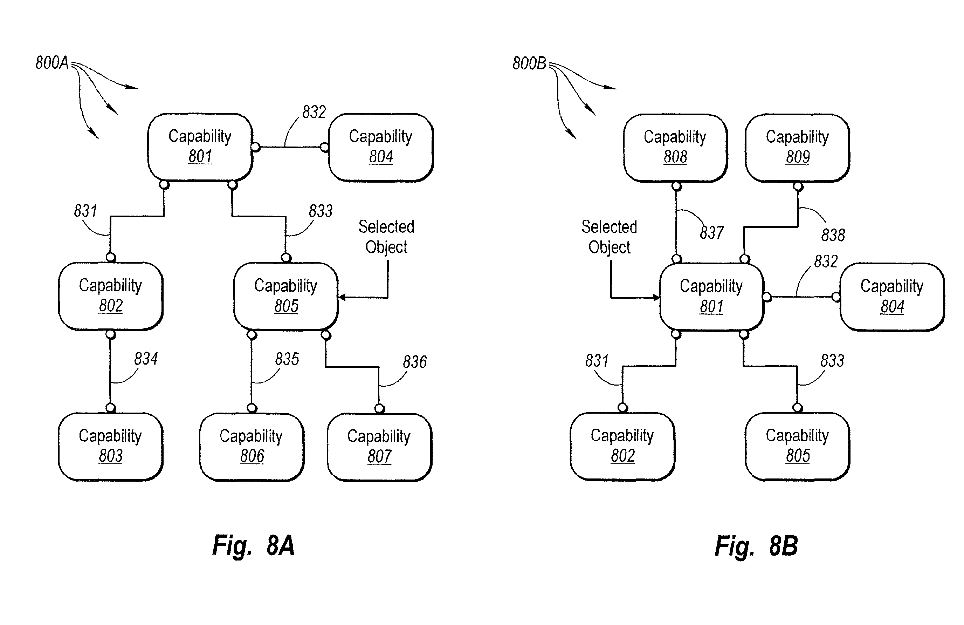

Figure 4 illustrates an example flowchart of a method 400 for navigating a visual representation of a schematized business network. Figures 8A and 8B illustrate visual representations 800A and 800B respectively of a schematized business network where the focus of the visual representation is changed. The method 400 will be described with respect to the data and components in Figure 1 and the visual representations 800A and 800B.

Method 400 includes an act of visually rendering a portion of a navigable business architecture map (act 401). The portion of the navigable business architecture map including visually rendered graphical attribute objects and visually rendered graphical relationship objects arranged to reflect the configuration of a corresponding portion of a business architecture. For example, mapping module 103 can render visual representation 800A. Visual representation 800A includes business capability objects 801 - 807 and business capability relationship objects 831 - 836. The arrangement of capability objects 801 - 807 and business capability relationship objects 831 - 836 can reflect the configuration of a portion of a business architecture, for example, modeled by business architecture models 111.

Method 400 includes an act of selecting a first of the graphical objects as the point of focus within the portion of the navigable business architecture map (act 402). Thus, the remaining unselected graphical objects provide context to the functionality of a business attribute or a business attribute relationship represented by the selected graphical object. For example, mapping module 103 can receive user input selecting business capability object 805. Thus, business capability object 805 transitions to the point of focus within visual representation 800A. Accordingly, the remaining unselected business capability objects 801-804, 806 and 807 and business capability relationship objects 831-836 provide context to the functionality of business capability represented by business capability object 805.

Method 400 includes an act navigating to a second graphical object within the navigable business architecture map (act 403). For example, navigation module 106 can receive user-input for navigating to business capability object 801. User-input can include input for navigating business capability relationship object 833.

Method 400 includes an act of selecting the second graphical object as the point of focus (act 404). For example, mapping module 103 can receive user input selecting business capability object 801 as the point of focus. Alternately, as a result of navigating to business capability object 801, business capability object 801 is automatically selected as the point of focus.

Method 400 includes an act of visually rendering second unselected graphical attribute objects and second unselected graphical relationship objects around the selected second graphical object to provide context to the functionality of a second business attribute or a second business attribute relationship represented by the selected second graphical object (act 405). The visually rendered second unselected graphical attribute objects and visually rendered second unselected graphical relationship objects are arranged to reflect the configuration of a corresponding second portion of the business architecture. For example, rendering module 108 can render visual representation 800B. Visual representation 800B includes business capability objects 801, 802, 804, 805, 808, and 809 and business capability relationship objects 831 - 833, 837, and 838. The arrangement of business capability objects 801, 802, 804, 805, 808, and 809 and business capability relationship objects 831 - 833, 837, and 838 can reflect the configuration of a second portion of the business architecture, for example, modeled by business architecture models 111.

Visual representation 800B depicts unselected business capability objects 802, 804, 805, 808, and 809 and unselected business capability relationship objects 831 - 833, 837, and 838. Unselected business capability objects 802, 804, 805, 808, and 809 and unselected business capability relationship objects 831 - 833, 837, and 838 provide context to the functionality of business capability represented by business capability object 801. Accordingly, as a user navigates objects in a visual representation of a business model, relevant context can provided for a selected object.

Embodiments of the presenting invention can also used to visually present a plurality of different business layers simultaneously. In some embodiments, maps for different business layers can be presented separately in a side-by-side arrangement. For example, visual representation 600A and visually representation 600A can be presented side-by-side at user-interface 102. Viewing visual representations of different business layers simultaneously can provide a use with increased insight into the represented business architecture.

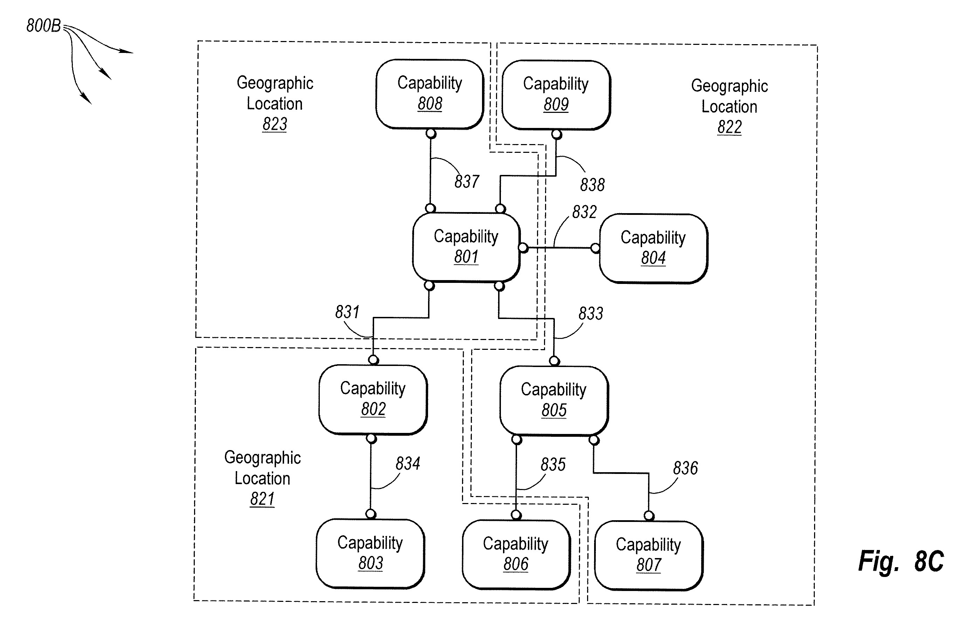

Figure 8C illustrates a visual representation 800C of the schematized business network from Figures 8A and 8B overlaid on top of a visual representation of a model from a geographical business layer. Visual representation 800C includes business capability objects 801-809 and business capability relationship objects 831-838. Overlaid on top of business capability objects 801-809 and business capability relationship objects 831- 838 are geographic locations 821, 822, and 823. Geographic locations can include countries, cities, states, campuses, buildings, offices, streets, etc.

As depicted, business capability objects 802, 803, and 806 reside at geographic location 821, business capability objects 809, 804, 805, and 807 reside at geographic location 822, and business capability objects 801 and 808 reside at geographic location 823. Thus, a user can efficiently determine what business capabilities exist and where the business capabilities are located.

Within visual representation 800C, some business capability relationship objects reside at a single geographic location. For example, business capability relationship object 837 resides at geographic location 823, business capability relationship object 834 resides at geographic location 821, and business capability relationship object 836 resides at geographic location 822. However, other business capability relationship objects span across geographic locations. For example, business capability relationship object 831 spans between geographic locations 823 and 821, business capability relationship objects 838, 832, and 833 span between geographic locations 822 and 823, and business capability relationship object 835 spans between geographic locations 821 and 822. Thus, a user can efficiently determine what business capability relationships exist and how the business capability relationships span geographic locations.

For clarity, locations 821, 822, and 823 are identified by dashed lines. However, actual geographic maps, such as, for example, maps of earth, countries, states, campuses, buildings, cities, etc. can be used. Business components residing at specified location can be rendered at or neat that location on a map. Business components that span locations can be rendered to appropriately depict spanning, such as, for example, connecting other business compoents in different locations. Viewing overlays of a plurality of different business layers in the same visual representation can provide a user with increased insight into the represented business architecture.

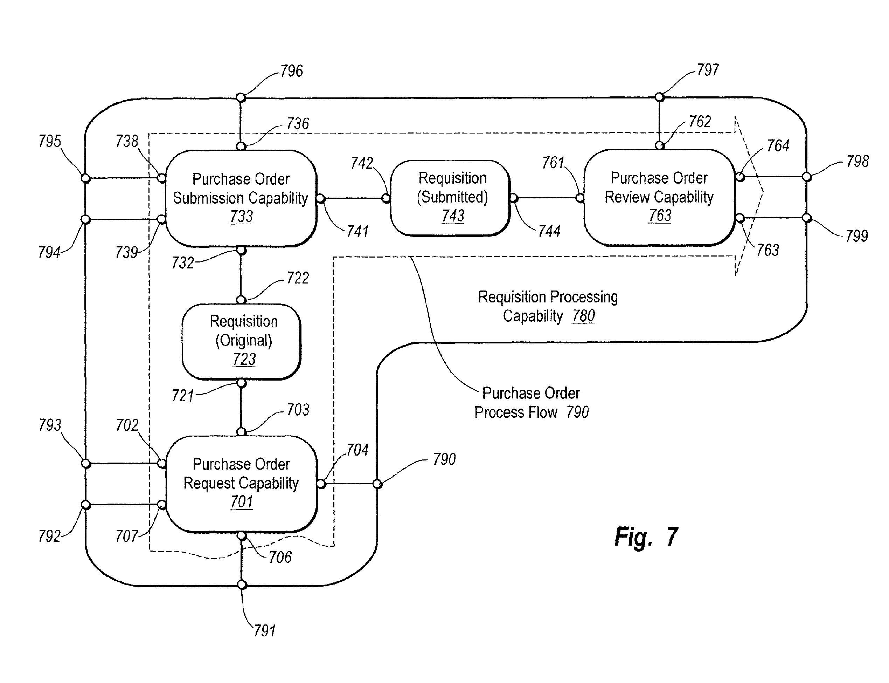

Figure 7 illustrates a visual representation of a model of a purchase order process flow 790 overlaid on top of a visual representation of a requisition process capability 780. As depicted, purchase order request capability 501 (a business capability) is connected out of port 703 to requisition 723 (a connector) at port 721. Requisition 723 is in turn connected out of port 722 to purchase order submission capability 733 at potion 732. Purchase order submission capability 733 is connected out of port 741 to requisition 743 (a connector) at port 742. In turn, requisition 743 is connected out of port 744 to purchase order review capability at port 761.

Embodiments of the present invention can include one-way ports and connectors. For example, it may be that, from time to time, requisition 723 transfers data from purchase order request capability 701 (coming out of port 703 and into port 721) to purchase order submission capability 733 (coming out of port 722 and into port 733). Embodiments of the present invention can include two-way ports and connectors. For example, it may be that, from time to time, requisition 743 transfers data from purchase order review capability 763 (coming out of port 761 and into port 744) to purchase order submission capability 733 (coming out of port 742 and into port 741). On the other hand, it may also be that, from time to time, requisition 743 transfers data from purchase order review capability 733 (coming out of port 741 and into port 742) to purchase order submission capability 733 (coming out of port 744 and into port 761)

Ports 790-799 represent that requisition processing capability 580 can exchange data with other business capabilities and connectors, for example, included in part of general procurement network of business capabilities.

As depicted, purchase order process flow 790, utilizes purchase order request capability 701, requisition 723, purchase order submission capability 733, requisition 743, and purchase order review capability 763. Thus, a user can efficiently determine what business capabilities and connectors are used to implement purchase order process flow 790.

Embodiments of the present invention also include visual representations of business models that facilitate navigation between different business layers. For example in visual representation 700, a user can navigate from purchase order capability request 701 (e.g., at business capability layer 121) to purchase order process flow 790 (e.g., at business process flow layer 141). Similarly, in visual representation 800C a user can navigate from business capability object 803 (e.g., at business capability layer 121) to geographic location 821 (e.g., at geographical layer 161).

Selection of a business component in a different business layer can cause an increased level of detail to be visually rendered for the different business layer. For example, navigating to purchase order process flow 790 can cause visual representation 700 to transition to a more detailed visual representation of purchase order process flow 790, including, for example, other process flows that interact with purchase order process flow 790. Similarly, navigating to location 821 can cause visual representation 800C to transition to a more detailed view of location 821, including, for example, business components from other business layers (e.g., form a service network layer, a business organizational layer, etc.) that also reside at location 821.

Selection of a business component in a different business layer can also cause a reduced level of detail to be visually rendered for the current business layer. For example, navigating to purchase order process flow 790 can cause visual representation 700 to transition to a less detailed visual representation of requisition processing capability 780 including, for example, abstracting out purchase order request capability 701, requisition 723, purchase order submission capability 733, requisition 743, and purchase order review capability 763. Similarly, navigating to location 821 can cause visual representation 800C to transition to a less detailed view of locations 822 and 823, including, for example, abstracting out business capability objects 808, 809, and 807.

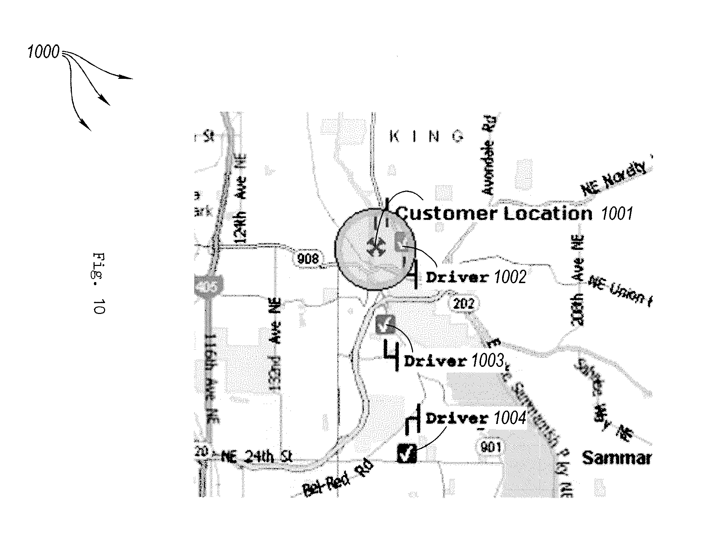

Figure 10 illustrates a further visual representation 1000 of the locations of a plurality of drivers relative to a customer. The visual representation 100 may be presented to a customer service representative that receives a call from a retail store about an urgent delivery. The representative needs identify the physical location of customer location 1001 (e.g., data derived from the customer relationship database). The representative then determines which of the drivers 1002, 1003, and 1004 are delivering in near the customer location 1001 (e.g., data derived from the enterprise resource management system) and what warehouse has the goods available that the customer wants. All this information is presentable using a map-like tool. Further the presentable information can be derived from structured information available in a model representing the business and its various interconnections.

Embodiments of the present invention provide mechanisms to visualize and navigate a networked business structure. Users can configure levels of detail such that the appropriate amount of detail for a given task is provided. Further, users can navigate across business layers without having to associate or understand the structures of the different business layers. Accordingly, users are provided business context for completing tasks more efficiently without being overwhelmed by unneeded business details and without lacking all the relevant business details.

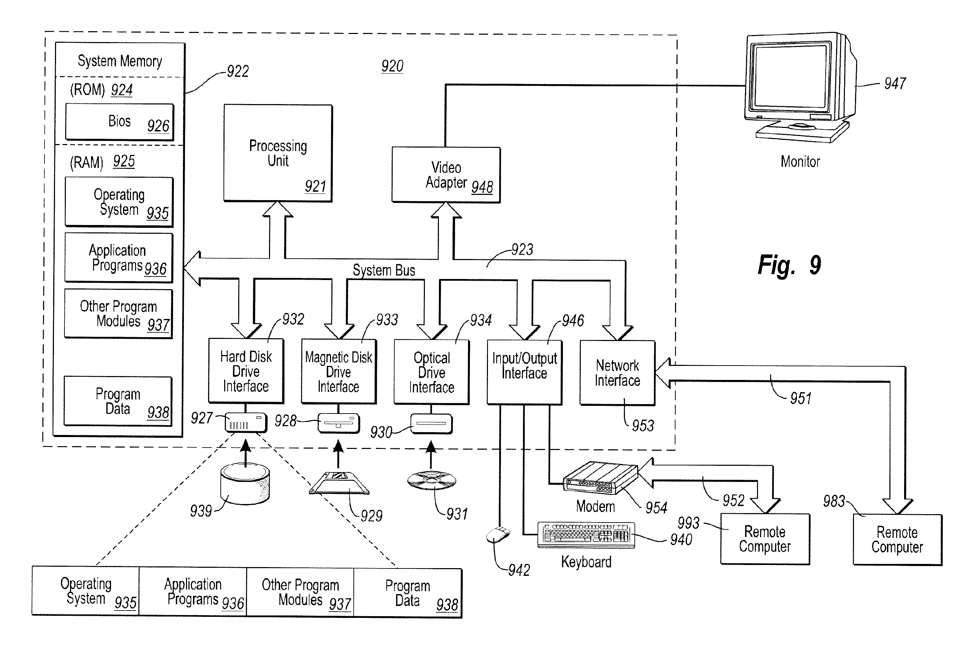

Figure 9 and the following discussion are intended to provide a brief, general description of a suitable computing environment in which the invention may be implemented. Although not required, the invention can be implemented in the general context of computer-executable instructions, such as program modules, being executed by computer systems. Generally, program modules include routines, programs, objects, components, data structures, and the like, which perform particular tasks or implement particular abstract data types. Computer-executable instructions, associated data structures, and program modules represent examples of the program code means for executing acts of the methods disclosed herein.

With reference to Figure 9, an example system for implementing the invention includes a general-purpose computing device in the form of computer system 920, including a processing unit 921, a system memory 922, and a system bus 923 that couples various system components including the system memory 922 to the processing unit 921. Processing unit 921 can execute computer-executable instructions designed to implement features of computer system 920, including features of the present invention. The system bus 923 may be any of several types of bus structures including a memory bus or memory controller, a peripheral bus, and a local bus using any of a variety of bus architectures. The system memory includes read only memory ("ROM") 924 and random access memory ("RAM") 925. A basic input/output system ("BIOS") 926, containing the basic routines that help transfer information between elements within computer system 920, such as during start-up, may be stored in ROM 924.

The computer system 920 may also include magnetic hard disk drive 927 for reading from and writing to magnetic hard disk 939, magnetic disk drive 928 for reading from or writing to removable magnetic disk 929, and optical disk drive 930 for reading from or writing to removable optical disk 931, such as, or example, a CD-ROM or other optical media. The magnetic hard disk drive 927, magnetic disk drive 928, and optical disk drive 930 are connected to the system bus 923 by hard disk drive interface 932, magnetic disk drive-interface 933, and optical drive interface 934, respectively. The drives and their associated computer-readable media provide nonvolatile storage of computer-executable instructions, data structures, program modules, and other data for the computer system 920. Although the example environment described herein employs magnetic hard disk 939, removable magnetic disk 929 and removable optical disk 931, other types of computer readable media for storing data can be used, including magnetic cassettes, flash memory cards, digital versatile disks, Bernoulli cartridges, RAMs, ROMs, and the like.

Program code means comprising one or more program modules may be stored on hard disk 939, magnetic disk 929, optical disk 931, ROM 924 or RAM 925, including an operating system 935, one or more application programs 936, other program modules 937, and program data 938. A user may enter commands and information into computer system 920 through keyboard 940, pointing device 942, or other input devices (not shown), such as, for example, a microphone, joy stick, game pad, scanner, or the like. These and other input devices can be connected to the processing unit 921 through input/output interface 946 coupled to system bus 923. Input/output interface 946 logically represents any of a wide variety of different interfaces, such as, for example, a serial port interface, a PS/2 interface, a parallel port interface, a Universal Serial Bus ("USB") interface, or an Institute of Electrical and Electronics Engineers ("IEEE") 1394 interface (i.e., a FireWire interface), or may even logically represent a combination of different interfaces.

A monitor 947 or other display device is also connected to system bus 923 via video interface 948. Speakers or other audio output device is also connected to system bus 923 via an audio interface. Other peripheral output devices (not shown), such as, for example, printers, can also be connected to computer system 920.

Computer system 920 is connectable to computer networks, such as, for example, an office-wide or enterprise-wide computer network, a home network, an intranet, and/or the Internet. Computer system 920 can exchange data with external sources, such as, for example, remote computer systems, remote applications, and/or remote databases over such computer networks.

Computer system 920 includes network interface 953, through which computer system 920 receives data from external sources and/or transmits data to external sources. As depicted in Figure 9, network interface 953 facilitates the exchange of data with remote computer system 983 via link 951. Network interface 953 can logically represent one or more software and/or hardware modules, such as, for example, a network interface card and corresponding Network Driver Interface Specification ("NDIS") stack. Link 951 represents a portion of a computer network (e.g., an Ethernet segment), and remote computer system 983 represents a node of the computer network.

Likewise, computer system 920 includes input/output interface 946, through which computer system 920 receives data from external sources and/or transmits data to external sources. Input/output interface 946 is coupled to modem 954 (e.g., a standard modem, a cable modem, or digital subscriber line ("DSL") modem), through which computer system 920 receives data from and/or transmits data to external sources. As depicted in Figure 9, input/output interface 946 and modem 954 facilitate the exchange of data with remote computer system 993 via link 952. Link 952 represents a portion of a computer network and remote computer system 993 represents a node of the computer network.

While Figure 9 represents a suitable operating environment for the present invention, the principles of the present invention may be employed in any system that is capable of, with suitable modification if necessary, implementing the principles of the present invention. The environment illustrated in Figure 9 is illustrative only and by no means represents even a small portion of the wide variety of environments in which the principles of the present invention may be implemented.

In accordance with the present invention, user-interfaces, mapping modules, rendering modules, level of detail modules, layer selection modules, and rendering modules as well as associated data, including business models, mapping schemas, and business architecture maps, may be stored and accessed from any of the computer-readable media associated with computer system 920. For example, portions of such modules and portions of associated program data may be included in operating system 935, application programs 936, program modules 937 and/or program data 938, for storage in system memory 922.

When a mass storage device, such as, for example, magnetic hard disk 939, is coupled to computer system 920, such modules and associated program data may also be stored in the mass storage device. In a computer network environment, program modules depicted relative to computer system 920, or portions thereof, can be stored in remote memory storage devices, such as, system memory and/or mass storage devices associated with remote computer system 983 and/or remote computer system 993. Execution of such modules may be performed in a distributed environment as previously described.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes, which come within the meaning and range of equivalency of the claims, are to be embraced within their scope.

## Claims

1. At a computer system, a method for generating a map of a business model, the method comprising:
an act of accessing a structured business model of a business architecture, the structured business model including business attributes and business attribute relationships that are formatted in accordance with data formats defined in a structured data model;
an act of generating a renderable attribute object for each business attribute;
an act of generating a renderable relationship object for each business attribute relationship;
an act of visually rendering the attribute objects and the relationship objects as a navigable business architecture map that reflects the configuration of the business architecture.

2. The method as recited in claim 1, wherein the act of accessing a structured business model of a business architecture comprises an act of a accessing a structured business model corresponding to a specific business layer.

3. The method as recited in claim 2, wherein the act of accessing a structured business model corresponding to a specific business layer comprises an act of accessing a structured business model corresponding to a specific business layer selected from among a business capability layer, a service network layer, a business process flow layer, a business organizational layer, and a geographical layer.

4. The method as recited in claim 1, wherein the act of generating a renderable attribute object for each business attribute comprises an act of utilizing a mapping schema to transform business attributes into renderable attribute objects.

5. The method as recited in claim 1, wherein the act of generating a renderable relationship object for each business attribute relationship comprises an act of utilizing a mapping schema to transform business attribute relationships into renderable relationship objects.

6. The method as recited in claim 1, wherein the act of visually rendering the attribute objects and the relationship objects as a navigable business architecture map comprises an act of presenting the navigable business architecture map at a user-interface.

7. The method as recited in claim 1, further comprising:
an act of accessing a second structured business model of the business architecture, the second structured business model including second business attributes and second business attribute relationships;
an act of generating a second renderable attribute object for each second business attribute;
an act of generating a second renderable relationship object for each second business attribute relationship;
an act of visually rendering the second graphical attribute objects and the second graphical relationship objects such that the second graphical attribute objects and the second graphical relationship objects are overlaid on the navigable business architecture map.

8. At a computer system, a method for navigating a map of a business model, the method comprising:
an act of visually rendering a portion of a navigable business architecture map, the portion of the navigable business architecture map including visually rendered graphical attribute objects and visually rendered graphical relationship objects arranged to reflect the configuration of a corresponding portion of a business architecture;
an act of selecting a first of the graphical objects as the point of focus within the portion of the navigable business architecture map such that the remaining unselected graphical objects provide context to the functionality of a business attribute or a business attribute relationship represented by the selected graphical object;
an act of navigating to a second graphical object within the navigable business architecture map;
an act of selecting the second graphical object as the point of focus; and
an act of visually rendering second unselected graphical attribute objects and second unselected graphical relationship objects around the selected second graphical object to provide context to the functionality of a second business attribute or a second business attribute relationship represented by the selected second graphical object, the visually rendered second unselected graphical attribute objects and visually rendered second unselected graphical relationship objects arranged to reflect the configuration of a corresponding second portion of the business architecture.

9. The method as recited in claim 8, wherein the act of visually rendering a portion of a navigable business architecture map comprises an act of rendering a portion of a navigable business architecture map that represents business components from a plurality of different business layers.

10. The method as recited in claim 8, wherein the act of navigating to a second graphical object within the navigable business architecture map comprises an act of navigating to a second graphical object that is in the same business layer as the first graphical object.

11. The method as recited in claim 8, wherein the act of navigating to a second graphical object within the navigable business architecture map comprises an act of navigating to a second graphical object that is different business layer than the first graphical object.

12. The method as recited in claim 11, further comprising:
an act of reducing the level of detail associated with the business layer corresponding to the first graphical object in response to navigating to the different business layer.

13. The method as recited in claim 11, further comprising:
an act of increasing the level of detail associated with the different business layer in response to navigating to the different business layer.

14. At a computer system, a method altering the level of detail in a map of a business model, the method comprising:
an act of receiving an indication that a business architecture map having an initial level of detail is to be rendered;
an act of visually rendering graphical attribute objects and graphical attribute relationship objects as a navigable business architecture map having the initial level of detail, the navigable business architecture map reflecting the configuration of a corresponding business architecture at the initial level of detail, the graphical attribute objects and graphical relationship objects representing structured business attributes and structured business attribute relationships respectively of the business architecture;
an act of receiving an indication that the initial level of detail is to be changed to an updated level of detail; and
an act of visually rendering at least part of graphical attribute objects and graphical attribute relationship objects as at least a portion of the navigable business architecture map having the updated level of detail, the at least a portion of the navigable business architecture map reflecting the configuration of a portion of the corresponding business architecture at the updated level of detail.

15. The method as recited in claim 14, wherein the act of receiving an indication that a business architecture map having an initial level of detail is to be rendered comprises an act of receiving an indication that at least two different graphical objects representing different business attributes and business attribute relationships are to be initially rendering with different levels of detail

16. The method as recited in claim 14, wherein the act of visually rendering graphical attribute objects and graphical attribute relationship objects as a navigable business architecture map having the initial level of detail comprises an act of visually rendering a plurality of different business layers.

17. The method as recited in claim 14, wherein the act of receiving an indication that the initial level of detail is to be changed to an updated level of detail comprises an act of zooming in on at least one graphical object such that the graphical object is rendered with increased detail.

18. The method as recited in claim 14, wherein the act of receiving an indication that the initial level of detail is to be changed to an updated level of detail comprises an act of zooming out on at least one graphical object such that the graphical object is rendered with decreased detail.

19. The method as recited in claim 14, wherein the act of receiving an indication that the initial level of detail is to be changed to an updated level of detail comprises an act of receiving an indication that the level of detail for a specified business layer is to be increased.

20. The method as recited in claim 14, wherein the act of visually rendering at least part of graphical attribute objects and graphical attribute relationship objects comprises an act of rendering a configured amount of context for a specified business component at a user-interface.
